Europäisches Patentamt

European Patent Office

Office européen des brevets

(11) Publication number: **0 130 048**
**B1**

(12) **EUROPEAN PATENT SPECIFICATION**

(45) Date of publication of patent specification: **21.03.90**

(51) Int. Cl.⁵: **H 02 K 57/00, H 02 K 29/00**

(21) Application number: **84304196.3**

(22) Date of filing: **21.06.84**

(54) Permanent magnet motor.

(30) Priority: **21.06.83 US 506439**

(43) Date of publication of application:
**02.01.85 Bulletin 85/01**

(45) Publication of the grant of the patent:
**21.03.90 Bulletin 90/12**

(84) Designated Contracting States:
**AT BE CH DE FR GB IT LI LU NL SE**

(56) References cited:
**WO-A-83/01871
DE-A-2 247 143
DE-A-2 519 811
US-A-4 074 153**

**PATENT ABSTRACTS OF JAPAN, vol. 4, no. 130
(E-25), 12th September 1980, page 147 E 25; &
JP - A - 55 83479**

**PATENT ABSTRACTS OF JAPAN, vol. 1, no. 41
(E-76), 22nd April 1977, page 2433 E 76; & JP - A
- 51 137 812**

(73) Proprietor: **MAGNA MOTIVE INDUSTRIES
807 West Burlington Avenue
Fairfield Iowa 52556 (US)**

(72) Inventor: **McGee, Daniel Wayne
807 West Burlington Avenue
Fairfield Iowa 52556 (US)**
Inventor: **Rosinski, Stephan, Jr.
26 Mulberry Street
Boothwyn Pennsylvania (US)**
Inventor: **Setzer, Claude Samuel
c/o MIU Faculty Physics Department
Fairfield Iowa (US)**

(74) Representative: **Warren, Keith Stanley et al
BARON & WARREN 18 South End Kensington
London W8 5BU (GB)**

Courier Press, Leamington Spa, England.

## Description

This invention relates to a motor that produces a useful, working output based, at least in part, upon the use of a unique arrangement and configuration of permanent magnets. Conventional electric motors employ a changing electrical current to generate an electromagnetic field that interacts with a receptive ferrous material or another magentic field to create a force and induce movement. The present invention relies upon the energy provided by an electromagnet that is store in the inter-acting fields of the stator and rotor permanent magnets for at least a part of its prime motive force.

The motor disclosed herein stores the energy in the interacting magnetic fields of permanent magnets, such as rare earth cobalt magnets. They represent a significant step forward in magnetic energy product and coercive force. Although the composition of these magnets is not a part of the present invention, their properties make the present invention more practical from an economic standpoint. Rare earth cobalt magnets are from twenty to fifty times more resistant to demagnetization than conventional Alnico magnets. As a result, rare earth cobalt magnets may be used in applications for which other magnets were not considered due to their propensity to demagnetize in the presence of a reverse magnetic field of comparable strength.

Based upon the general theories of magnetism, it is believed that each electron in an atom exhibits properties associated with an electric charge spinning on its own axis and producing a small magnetic moment. The sum of these magnetic moments may add collectively to cause the atom to behave as a small magnet. When the atoms are placed into an external magnetic field, each one tends to align with the field, and when the external magnetic field is removed the material usually retains a residual magnetism. If the residual magnetism is strong and difficult to neutralize, i.e. if the magnet has a high coercive force, then the material is commonly known as a "permanent magnet."

In most magnetic materials the magnetic field utilized to align the atomic magnets is sufficient, when reversed in polarity, to disalign or demagnetize the material. This demagnetizing force is referred to as the coercive force $H_c$ and is defined as the magnetizing force required to bring the induction (magnetic flux density or magnetic flux per unit area) to zero in a magnetic material which is in a symmetrically cylically magnetized condition.

For an ordinary Alnico magnet, if a field equal to the coercive force is applied to the magnet to drive its magnetic flux density to zero, and is then removed, the flux will rebound only slightly. The magnet will effectively be demagnetized and remain so until it is remagnetized by another externally generated magnetic field. This happens because the coercive force $H_c$ is nearly the same as the intrinsic coercive force $H_{ci}$. The intrinsic coercive force $H_{ci}$ is the magnetizing force required to bring to zero the intrinsic induction in a magnetic material, or the contributions of all of the elementary atomic magnets.

For a rare earth cobalt magnet, if a field equal to the coercive force $H_c$ is applied to the magnet to drive its magnetic flux density to zero, and is then removed, the flux will rebound almost to its original value. Permanent magnets having this characteristic will commonly have a hysterisis loop exhibiting square loop characteristics. This is due to the fact that rare earth cobalt magnets have values for intrinsic coercive forces $H_{ci}$ that are several times larger (twenty to fifty times) than the values for ordinary coercive force $H_c$. Thus, the flux density may be repeatedly driven to zero without adversely affecting the magnet's intrinsic magnetization. This permits the magnet to be used in applications heretofore considered impractial because of the demagnetization that would occur. Although a number of theories have been proposed, it is not yet well known why rare earth cobalt magnets have such properties.

Additional information about the composition of rare earth cobalt magnets and information about their manufacture, characteristics, or uses is readily available in public literature. These magnets have greatly enhanced the operation and power output of the present invention, but they are not an essential part thereof. One may substitute other permanent magnets, such as Alnico magnets, although with less successful results. One may also substitute other sources of magnetic flux, whether generated electrically or by permanent magnets or a combination thereof.

An example of a permanent magnet motor is shown in U.S. Patent No. 4, 151, 431 to Johnson, which illustrates that permanent magnets may be used to do useful work. However, it differs from the present invention by using the combined forces of attraction and repulsion, and by using a markedly different mechanical configuration. Moreover the present invention has a generally uniform magnetic flux density across its stator gap, which the Johnson motor does not have.

Another example of a permanent magnet motor is described in JP—A—5583479 in which the gaps between the faces of the rotor magnets and the stator magnets gradually decrease in the direction of rotation.

WO83/01871 describes an embodiment of controlled electric drive device in which a pair of rectangular magnetic poles of different polarity are disposed adjacent, parallel and congruent to each other with a relatively narrow gap therebetween providing an essentially uniform magnetic field between the pole faces. A driver conductor is arranged to move freely between the magnetic pole faces in such a manner that an electric current running through the driver conductor tends to move the conductor out of the magnetic field at right angles to the conductor and to the direction of the magnetic lines of force defining the magnetic field. The driver conductor is fixed to a drive bar together with a pair of matched controller magnets which are in repulsive polarity with respect to the stator magnet pair. When the driver conductor is at its central equilibrium position, the controller magnets are half in and half out of the magnetic field between the magnetic pair. When an armature attached to the control bar is moved due to the current in the driver conductor, the restoring force increases due to the imbalance of the controller magnets. The cross sections of the controller magnets may be made triangular, or of other shape which is non-rectangular, in order to increase the rate of change of the magnetic repulsive force acting on the controller magnets as they are moved into and out of the magnetic field of the stator magnets.

Thus, it is an object of the present invention to provide a permanent magnet motor of the type described which produces a useable work output. It is another object to provide a permanet magnet motor that derives at least a portion of its work output from the energy (provided by an electromagnet) that is stored in the interacting fields of its permanent magnets. Further objects are to provide a permanent magnet motor which has a unique yet straightforward design to minimize production and manufacturing costs and which operates without producing pollutants or excessive noise.

The invention consists in an electromagnetic rotary motor comprising:

a) stator means including stator magnet means having opposing pole faces defining a gap therebetween, said gap having an entrance section, and exit section and a generally curved longitudinal path extending from the entrance section to the exit section about a transverse axis said opposing pole faces having a face-to-face distance which changes from the entrance section to the exit section so that the magnetic flux density changes in the gap as a function of arc degree position about the transverse axis;

b) a rotor mounted for rotation about an axis generally coincident with the transverse axis, said rotor including a predetermined number of rotor magnets disposed radially outwardly from the transverse axis and substantially within the gap, each pole of each rotor magnet being spaced from the stator pole face and aligned in a predetermined orientation with respect thereto, the magnetic field of each of the rotor magnets interacting with the magnetic field of the stator magnet means; and

c) electronic control means for inducing an electromagnetic field from an external source of energy, said control means being responsive to the relative rotational position of the rotor for successively interacting with the magnetic field of each of the rotor magnets to urge each of the rotor magnets towards the entrance section of the gap, whereby the magnetic field of each rotor magnet interacts with the magnetic field of the stator means and the control means creating forces which urge the rotor magnets along the longitudinal path of the stator gap, causing the rotor to rotate about the transverse axis.

The magnetic field of each rotor magnet may interact with the magnetic field of the stator magnets through either repulsion or attraction. The electronic control means may induce an electromagnetic field which interacts with the magnetic field of a rotor magnet or the stator magnets selectively to enhance or retard the rotational speed of the rotor.

In order that the present invention may be more readily understood, reference will now be made to the accompanying drawings, in which:-

Figure 1 is a perspective view of two generally planar and parallel magnets oriented with opposite polarity poles facing each other. The vectors represent magnetic field lines in the gap between the two magnets.

Figure 2 is a perspective view of a generally planar magnet illustrating its associated magnetic field lines.

Figure 3 is a perspective view of two generally planar and parallel magnets as in Fig. 1, oriented so that one is slightly inclined with respect to the other, and further having a planar magnet, as in Fig. 2, therebetween.

Figures 4 and 5 are perspective, partial views of two generally planar and parallel stator magnets. The stator magnets are slightly inclined with respect to one another and are oriented with opposite polarity poles facing each other. A rotor magnet is disposed for movement therebetween.

Figure 6 is an end elevation view of the one embodiment of the present invention.

Figure 7 is a combination plan and sectional plan view of the present invention.

Figure 8 is a partial elevation and longitudinal section view of the present invention taken along the lines 8—8 of Figure 7 with the right half stator portion shown in elevation and selected items deleted for clarity.

Figure 9 is a transverse sectional view taken along lines 9—9 of Fig. 8.

Figure 10 is a transverse sectional view taken along lines 10—10 of Fig. 8.

Figure 11 is an exploded perspective view of a rotor permanent magnet and its mounting means for the present invention.

Figure 12 is an end elevation of a second embodiment of the present invention.

Figure 13 is a schematic sectional plan view of a second embodiment of the present invention.

Figure 13A is a transverse sectional view taken along lines 13A—13A of Fig. 13 showing the rotor and associated stator magnets.

Figure 13B is an exploded perspective of a rotor permanent magnet of the second embodiment of the present invention.

Figure 14 is a block diagram of the electronic control means of the present invention.

Figure 15 is a block and schematic diagram of the electronic timing adjustment circuit portion shown in Figure 14.

Figure 16 is a block and schematic diagram of the electromagnet and electromagnetic controller shown in Figure 14.

Figure 17 is a schematic diagram of an alternate embodiment of the electromagnet and electromagnet controller.

The invention disclosed herein maximizes the derivation of work from the energy stored in the interacting fields of permanent magnets, such as those made from rare earth cobalt, by moving a rotor permanent magnet through stationary magnetic fields created by stator permanent magnets. In one embodiment of this invention the distance between opposing stator magnet pole faces continuously increases from one position to the next, and the magnetic forces between the pole faces decreases in inverse proportion to or as a function of the squared distance from the pole face. Due to the difference in forces acting upon the rotor magnet, it is accelerated toward that section of the stator having a wider distance between the poles, until it escapes from the field.

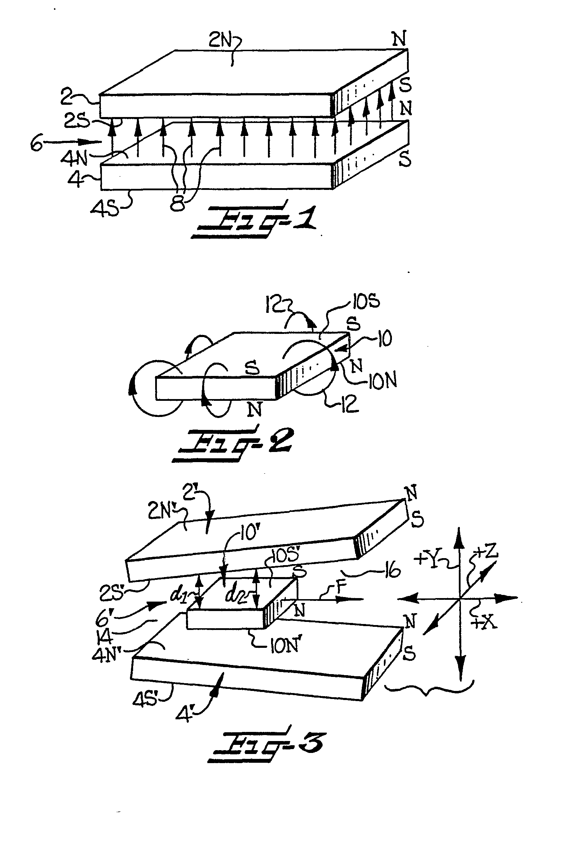

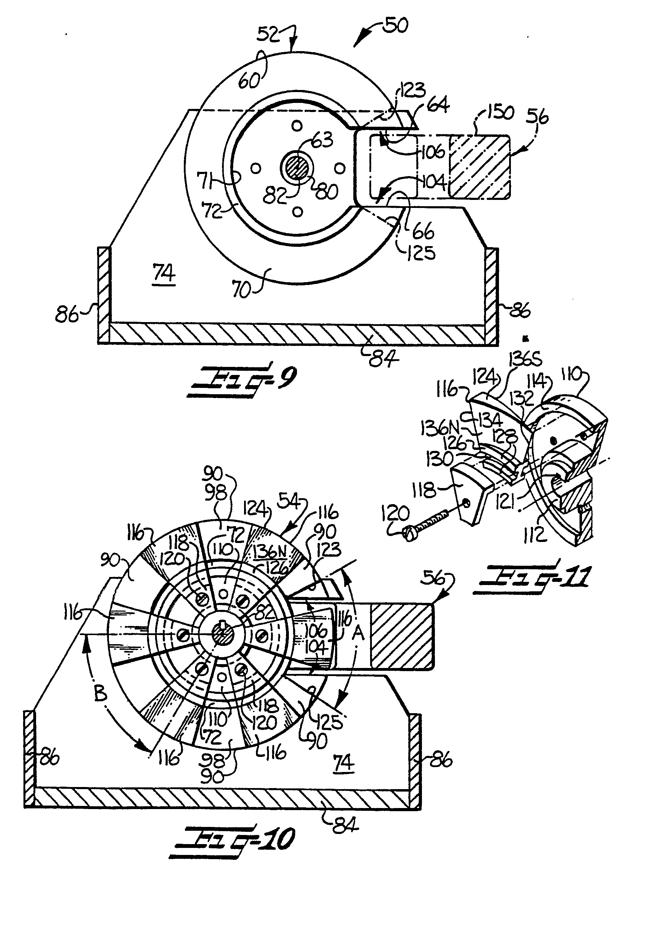

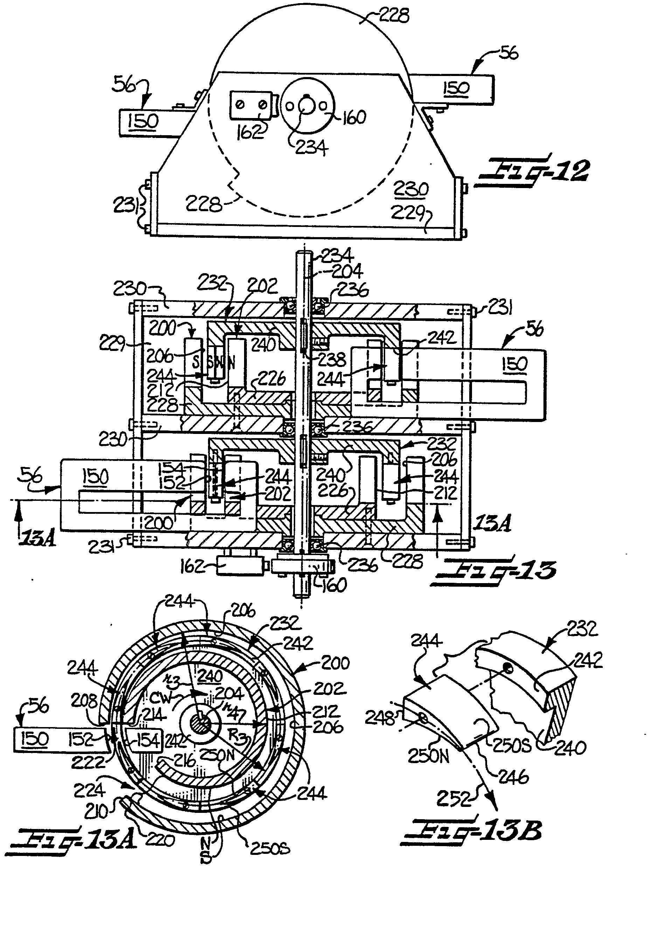

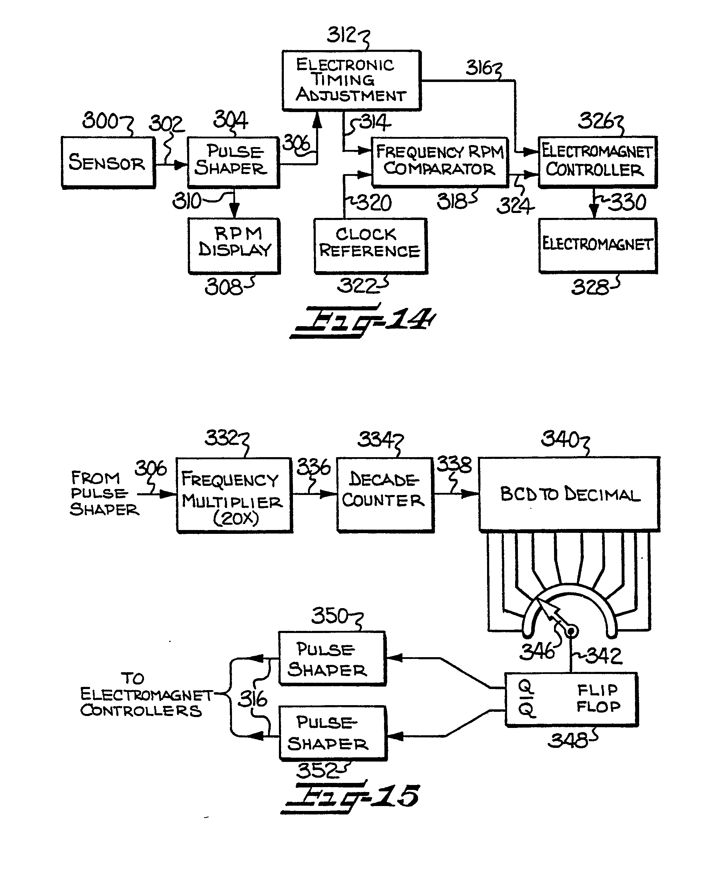

Figures 1 to 5 are simplified diagrams to illustrate exemplary magnetic forces between the stator and rotor magnets, and to provide a basic understanding of the operation of the present invention. The structure to support the stator and rotor permanent magnets shown in Figures 1 to 5 has been eliminated for clarity, but it is shown in Figures 6 to 13B which illustrate the presently contemplated preferred embodiments and structures for practicing the present invention.

Referring to Figure 1, a pair of generally parallel permanent magnets 2, 4 each shaped as a rectangular prism, are maintained in a fixed spaced relationship that defines a gap 6 therebetween. Each magnet has its north (N) and south (S) poles, 2N, 2S, 4N, 4S, respectively, on the larger faces thereof. Opposite polarity poles, such as 2S, 4N, face each other across the gap 6 so that the magnetic fields interact, resulting in an attractive force between the magnets 2, 4. The ideal undisturbed magnetic field lines in the gap 6 are indicated by the plurality of magnetic induction vectors 8 and illustrate the uncform magnetic flux density between the pole faces 2S, 4N and within the gap 6. Outside of the gap 6 the magnetic flux density becomes non-uniform. The true magnetic field lines are more complex, but they have been drawn as straight lines to illustrate the scientific principles involved in this invention. These magnets 2, 4 represent the stator magnets of the present invention.

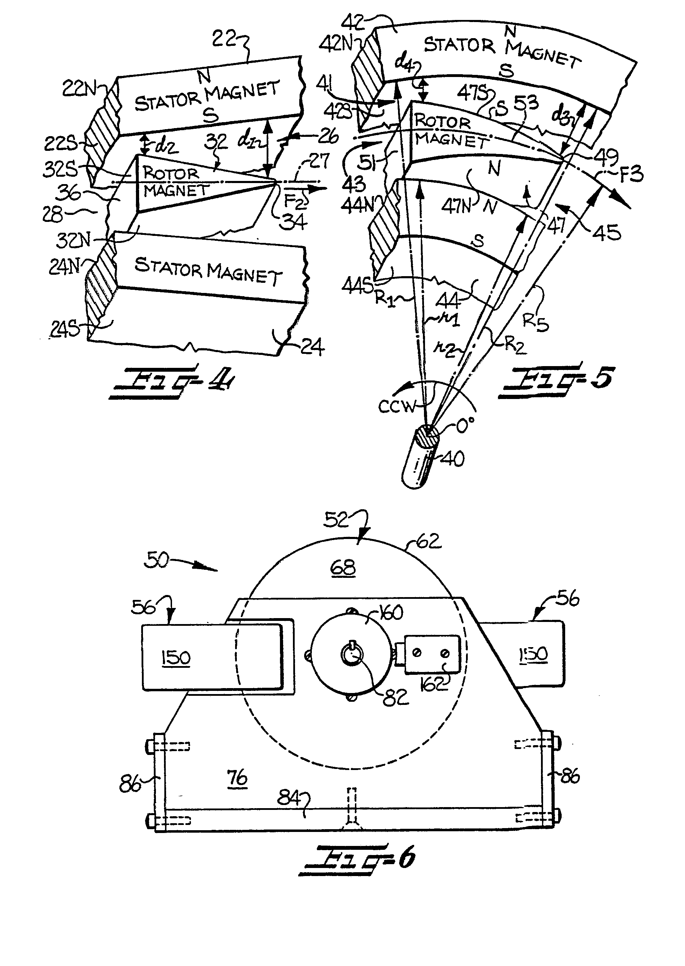

Referring to Figure 2, a single permanent magnet 10 is shaped as a rectangular prism and has its north and south poles on the larger faces 10N, 10S thereof. The ideal undisturbed magnetic field lines are again indicated by a plurality of magnetic induction vectors 12. The magnetic flux density surrounding this magnet is not uniform and varies as a function of the location around the magnet and the distance from the magnet pole face 10S or 10N. This magnet represents a rotor magnet of the present invention.

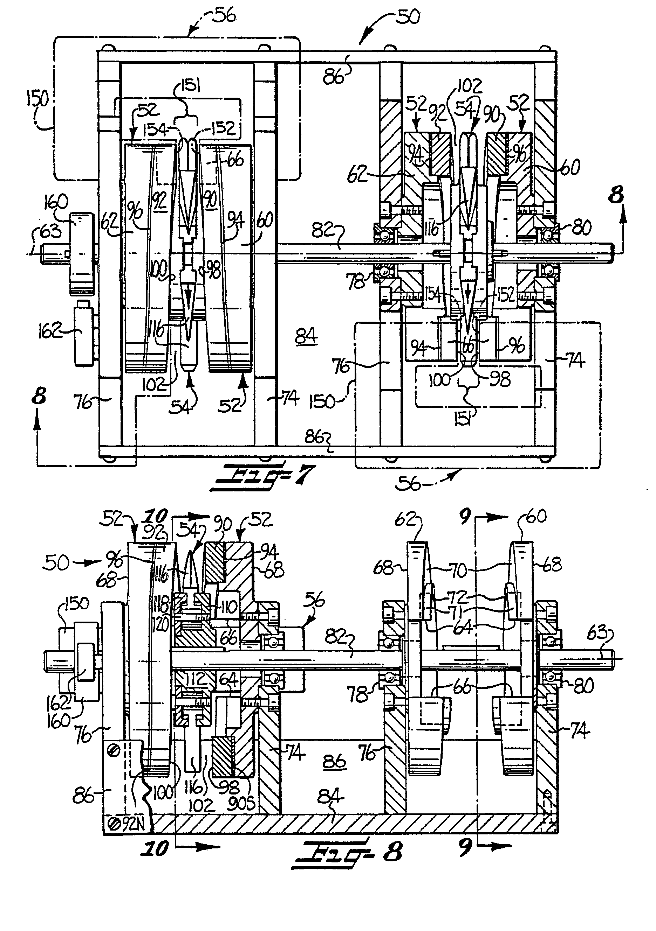

Referring to Figure 3, the generally parallel stator magnets of Figure 1 are sloped, or have their pole faces inclined, with respect to one another so as to be truly parallel only along the indicated Z axis. Thus, magnets 2', 4' have opposite polarity pole faces 2S', 4N' that face one another and define a gap 6'. The inclined orientation of the two magnets 2', 4' results in the gap 6' having a narrower entrance section 14 at one end and a wider exit section 16 at the opposite end. A single permanent magnet 10' is disposed in the gap 6'. It is generally parallel to magnets 2', 4' and equidistant from the two, assuming that each has the same strength magnetic field. The single magnet 10' is oriented so that its faces are repulsed by the faces of the two outer magnets 2', 4'. Thus, with respect to the Y axis, equal and opposite repulsive forces are generated between faces 2S' and 10S' and faces 4N' and 10N'. However, the distance between the faces of the center and stator magnets increases as one moves along the indicated positive X axis. Thus, the distance $d_1$ between faces 10S' and 2S' near the gap entrance section 14 is less than the distance $d_2$ between the same faces at a location closer to the gap exit section 16. As a result, the repulsive forces between the center and stator magnets are greater when the center magnet is nearer the gap entrance section 14, then they are when the center magnet is nearer the gap exit section 16. The net effect is a force F that accelerates the center magnet towards the gap exit section 16.

All of the embodiments disclosed herein disclose the stator and rotor magnets operating in the repulsion mode. It is to be understood that the invention is equally applicable to stator and rotor magnets operating in the attraction mode. This may be done in the embodiment of Figure 3 by turning over the center magnet 10 to reverse the polarity thereof. The net result is a force (not illustrated) that accelerates the center magnet toward the gap entrance section 14, in the opposite direction of the illustrated force F.

Figure 4 illustrates a permanent magnet motor that induces linear motion. Its configuration is similar to that of Figure 3. The stator comprises a pair of slightly inclined generally parallel permanent magnets 22, 24. Each is a rectangular prism having a predetermined length, and they are maintained in a fixed spaced relationship that defines a gap 26 therebetween and a longitudinal axis 27. The gap has a narrower entrance section 28 and a wider exit section 30 at opposite ends thereof, as defined by the opposing interior faces 22S, 24N of the stator magnets. Each stator magnet has its north and south poles N and S on the larger faces 22N, 22S, 24N, 24S thereof, and the opposite polarity poles 22S, 24N face each other across the gap 26.

The rotor or center magnet 32 is a triangular prism disposed within gap 26. It has a narrower circumferential end 34 closer to the gap exit section 30 and a wider circumferential end 36 closer to the gap entrance section 28. The two non-parallel rectangular faces are opposite magnetic poles 32N, 32S, and are in repulsion with respect to stator magnet faces 24N and 22S, respectively. The triangular cross sectional configuration of the rotor magnet increases the difference in distances from the rotor magnet to the stator magnets as measured at the opposite ends 34, 36 of the rotor magnet. Since $d_1$ is greater than $d_2$ the differences in repulsive forces results in a net force $F_2$ urging the rotor magnet to accelerate along the longitudinal axis 27 towards the gap exit section 30. One may substitute a rotor magnet that is a rectangular prism as illustrated in Fig. 3 for the triangular prism 32, illustrated in Fig. 4. This would reduce the difference between the distances $d_1$ and $d_2$, resulting in a reduction of the net force $F_2$; however, the difference between the distances resulting from the inclined stator magnets would still urge the rotor magnet to accelerate along the longitudinal axis 27. It is a matter of choice as to whether the stator magnets are inclined, the rotor magnet has a triangular cross section, or both are utilized.

Figure 5 illustrates a permanent magnet motor similar to that in Figures 3 and 4, and it induces rotational motion around an axis of rotation 40. The stator comprises a pair of permanent magnets 42, 44 in a generally parallel, locally inclined, fixed spaced relationship. Each is a rectangular prism that is bent to form a general C-shape. The radii for each stator magnet 42, 44 either increase or decrease, respectively, as measured from the axis of rotation to the surface or face of each magnet, to form a segment of a spiral. Each stator magnet encompasses no more than 360°, and together the two define a generally C-shaped gap 41 therebetween. The gap has a narrow entrance section 43 and a wider exit section 45 at the opposite end thereof. Each stator magnet has its north and south poles N and S on the longer faces 42N, 42S, 44N, 44S thereof. The opposite polarity poles face each other across the gap 41 to create a generally uniform magnetic field therebetween.

Referring to the inner stator magnet 44, the radial distance r from the axis of rotation 40 to the gap face 44N increases as the arc degree position advances counterclockwise (CCW) from a zero degree position as shown in Figure 5. Thus, $r_1$ is greater than $r_2$. Referring to the outer stator magnet 44, the radial distance R from the axis of rotation 40 to the gap face 42S decreases as the arc degree position advances counterclockwise from a zero degree position. Thus, $R_1$ is less than $R_2$. The range of radii r for the inner stator magnet 44 is less than the range of radii R for the outer stator magnet 42.

The center or rotor magnet 47 is a curved, generally triangular prism disposed within the gap 41. It has a narrower circumferential end or trip 49 closer to the gap wide end or exit section 45 and a wider circumferential end 51 closer to the gap narrow end or entrance section 43. The two curved faces are opposite magnetic poles 47S, 47N, and are in repulsion with respect to the curved stator magnet faces 42S and 44N, respectively, defining the gap 41. A curved central axis 53 bisects the rotor magnet and extends from the narrower end 49 to the midpoint of the wider end or base 51.

The rotor magnet is operatively attached to a rotor means by conventional methods for rotation around the axis of rotation 40 at a predetermined constant radius $R_5$. It is preferred that the curved central axis 53 of the rotor magnet have a radius of curvature equal to $R_5$, that the circle defined by the radius $R_5$ be equidistant at any selected arc degree position from the stator magnet faces 42S, 44N defining the gap 41, and that the central axis 53 of the rotor magnet coincide with the circle defined by the radius $R_5$.

The radial distance between the faces of the rotor magnet 47S, 47N and the respective faces of the stator magnets 42S, 44N increase as one moves clockwise around the axis 40 from the wider end 51 of the rotor magnet to the narrower end 49, regardless of the arc degree position of the rotor magnet, provided that the rotor magnet is entirely within the stator gap 41. Specifically, at the narrower end of the rotor magnet the radial distance from the rotor magnet face 47S to the stator magnet face 42S is illustrated as $d_3$. At the wider end of the rotor magnet the corresponding radial distance is illustrated as d4, which is less than $d_3$. Because $d_4$ is less than $d_3$ the difference in repulsive forces results in a net force $F_3$ urging the rotor magnet to accelerate along the arc described by the radius $R_5$ toward the gap exit section. While the invention has been described referring to repulsive magnetic forces, it is understood that attractive forces, or a combination of the attractive and repulsive forces may be utilized.

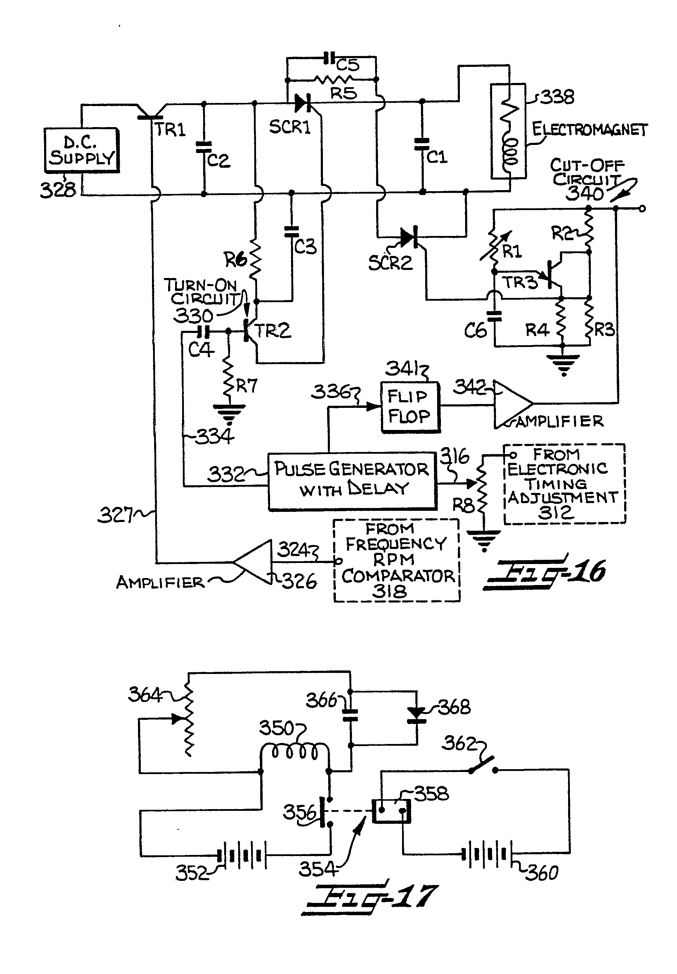

Referring to Figures 6, 7 and 8, one of the preferred embodiments shall be described using like numbers to designate like items. The invention is illustrated as having two stator-rotor units on a single common shaft. It should be understood that one or more stator-rotor units may be utilized, as necessary or desirable, and the number of rotor magnets may vary as necessary or desirable. When a multiplicity of stator-rotor units are paired, their stators may be 180° out of phase, as illustrated in Figures 6 and 7. This provides space for the electromagnets and minimizes torque impulses to smooth the combined rotational output at the shaft.

The permanent magnet motor 50 comprises three basic parts. The stator means 52 includes at least a pair of opposed permanent magnets that define a gap therebetween. The rotor means 54 includes a predetermined number of permanent magnets disposed for rotation in said gap. The electronic control means 56 includes an electromagnet that induces an electromagnetic field that interacts with the magnetic fields of the rotor and stator to control rotation of the rotor.

Referring primarily to Figures 8 and 9, the stator 52 includes a pair of opposed magnet keepers 60, 62 made of non-ferrous material. Each magnet keeper has a C-shaped configuration, with first and second ends 64, 66. The C-shape also defines a central longitudinal axis 63, that is coincident for the two magnet keepers. The outer stator surface 68 may be planar or any other suitable shape. The inner stator surface 70 forms a segment of a helix wherein the first and second ends 64, 66 are axially displaced a predetermined distance from one another. This shape is similar to that of a common split lockwasher. An annular ledge 72 protrudes axially outward from the inner stator surface 70 along the inner periphery 71 thereof, forming a shelf upon which to rest the stator magnets. The magnet keeper may be attached to a non-ferrous upstanding frame member 74 in a convenient manner, such as with screws 76, to maintain axial alignement and position.

The second or opposing magnet keeper 62 is a mirror image of a magnet keeper 60; thus, it is axisymmetrical with respect to a plane perpendicular to the longitudinal axis 63 that is located midway between the two magnet keepers. The location of such a plane is coincident with the cross sectional viewing line 9—9 of Figure 8. Magnet keeper 62 may be attached to a non-ferrous frame member 76 in the smae manner as magnet keeper 60. The frame members may house a pair of coaxial, spaced bearing means 78, 80 to rotatably support a shaft 82 coincident with the longitudinal axis 63. The frame members may be attached to a non-ferrous base 84 as necessary or desirable, and may include side supports 86.

A pair of C-shaped permanent magnets 90, 92 configured to match the helical inner surfaces 70 of the magnet keepers 60, 62, are attached thereto. The magnets are of uniform axial thickness and are magnetized through the axial thickness with opposite poles facing each other across the gap therebetween. Similarly C-shaped members 94, 96 of highly permeable magnetic material may be sandwiched between each stator magnet 90, 92 and its respective magnet keeper 60, 62 to form a part of the magnetic flux path. In addition, highly permeable magnetic material may be used at other locations to assist in shaping the magnetic field by absorbing magnetic flux to enhance the desired operating characteristics. For instance, it may connect the outer pole faces 90N, 92S to bridge the air gap and reduce the resistance of the magnetic circuit therebetween.

The inner opposing faces 98, 100 of the stator magnets 90, 92 define a curved, C-shaped gap 102 having an entrance section 104 (Fig. 9) adjacent magnet keeper end 66, and an exit section 106 adjacent magnet keeper 64. The gap has a gradually increasing width of uniform gradient measured axially between the opposing stator magnet faces 98, 100 as one moves around the gap from entrance to exit. While the magnet keepers have been described as having a non-uniform axial thickness to provide a helical shape, and the magnets have been described as having a uniform thickness, it is to be understood that these dimensions may vary provided that the gap, for this embodiment, has an axial face to face distance that increases from entrance to exit. Note, however, that this same design principal includes a gap with a gradually increasing axial face to face distance and a rotor magmet with a triangular cross section.

Referring to Figures 10 and 11, a rotor 54 is mounted for rotation on the shaft 82 coaxial with the longitudinal axis 63. The rotor includes a non-ferrous circular plate 110 with a central hub 112 and an annular raised lip 114 at the periphery. A predetermined number of permanent magnets 116 are disposed radially outwardly at equally spaced arc degree intervals. Six rotor magnets are shown, but the number may vary. A plurality of non-ferrous locking caps 118 coact with the rotor hub 112 and the peripherally located lip 114 to releasably clamp a portion of a rotor magnet therebetween. A screw or other fastener 120 is suitable. The rotor hub may include an axial slot 121 to accept a key connected to the shaft 82.

Referring to Figure 10, the stator magnet 90 is shown behind the rotor magnets 116, and surrounds approximately 300 arc degrees of the longitudinal axis 63 for a rotor having six magnets. The included arc-degree angle A measured between the end 123, 125 of the stator magnet should be approximately equal to the arc-degree angle B between the centers of adjacent rotor magnets, as measured in a plane perpendicular to the longitudinal axis. For instance, if there were ten rotor magnets, the angle A would be 36°.

Referring to Figure 11, each rotor magnet has an upper portion 124 shaped as a curved, generally triangular prism and a lower portion 126 shaped as a curved, generally rectangular prism. The lower portion may include protruding bosses 128 or it may define notches 130 as desirable to complement and interlock with the lip 114 on the rotor hub 112. The upper portion of the rotor magnet has a narrow tip end 132, a wider tail end 134, and planar, generally rectangular side faces 136S, 136N that are inclined towards one another. The rotor magnet is magnetized through its thickness with the north and south poles occupying each respective face. When clamped in position on the rotor hub the rotor magnets are oriented to be in repulsion with respect to the stator magnet faces defining the gap 102, and the tip end 132 leads rotation, entering the gap entrance section before the tail end 134. As an alternative, the rotor magnet may be magnetized in the opposite polarity to utilize attractive, rather than repulsive, forces.

Referring to Figures 6, 7 and 8, the electronic control means 56 includes a C-shaped electromagnet 150 having oppositing poles 152, 154 that define an air gap 151 therebetween. The electromagnetic poles 152, 154 are disposed between the first and second ends 64, 66 of the C-shaped stator magnets so that they are on opposite sides of the rotor magnets. The air gap has an axial thickness with respect to the longitudinal axis 63 that approximates the axial thickness of the gap entrance section 104. Preferably, there is one electromagnet for each rotor-stator set, and the opening defined by the stator magnets together with the associated electromagnets for each set are 180° apart to limit interaction between each other or from induced currents, and to smooth the motor's rotation. A more detailed description of the electromagnets, their associated circuitry, and their operation is provided later herein.

A tachometer means 160 causes an electrical circuit means 162 to generate an electrical output signal in response to the rotational speed and angular position of the shaft 82. The output signal is transmitted and processed by electronic means to control the electromagnet 150, causing it to induce or collapse a magnetic field between opposing poles 152, 154. The energy to operate the electromagnet may be provided by conventional sources.

Figures 12, 13, 13A and 13B disclose an alternate embodiment of the present invention. It relies upon the same principles disclosed earlier herein, but it utilizes a pair of opposed C-shaped stator magnets that are spiral shaped and nested one inside of the other, rather than being axisymmetrical mirror images of a portion of a helix. This embodiment generally includes a stator defining a longitudinal axis, a rotor mounted for rotation around said longitudinal axis, and an electronic control means.

The stator comprises at least one pair of permanent magnets in a predetermined generally parallel fixed spaced relationship. The outer magnet 200 and the inner magnet 202 are separate magnets. Both are C-shaped, and each defines a common transverse axis 204. Both stator magnets are rectangular prisms bent along their length to form a segment of a spiral. Thus, the inner axial surface 206 of the outer stator magnet 200 has a radius $r_3$ that gradually increases as one increases the arc degree position clockwise (CW) around the transverse axis 204 as indicated from the entrance end 208 of the magnet to its exit end 210. The outer axial surface 212 of the inner stator magnet 202 has a radius $r_4$ that gradually decreases as one increases the arc degree position clockwise around the transverse axis 204 from the entrance end 214 of the magnet to its exit end 216. All radii are measured from the transverse axis 204, and the radius gradient may be uniform. The range of radial distances $r_4$ for the inner stator magnet 202 is less than the range of radial distances $r_3$ for the stator magnet 200.

The inner and outer stator magnets are coaxial and generally coplanar, yet slightly inclined, with the inner stator magnet 202 nested inside of the outer stator magnet 200. Together, the outer surface 212 of the inner stator magnet and the inner stator surface 206 of the outer stator magnet define a curved, C-shaped longitudinal gap 220 having generally parallel sides. The entrance ends 208, 214 of the stator magnets are aligned radially to define a narrower gap entrance section 222, and the exit ends 210, 216 of the stator magnets are aligned radially to define a wider gap exit section 224. The gap dimensions referred to are measured radially, and the radiul face to face distance across the gap increases as one moves from entrance to exit.

Each stator magnet 200, 202 is magnetized through its radial thickness with opposite poles facing each other across the gap. For example, inner surface 206 is south (S) And outer surface 212 is north (N). Although all embodiments disclosed herein have opposite polarity poles facing each other across the gap, like poles could face each other across the gap if the rotor magnet were a sandwich construction with like poles on both outer surfaces.

The inner stator magnet keeper 226 and the outer stator magnet keeper 228 are made of non-ferrous material. Each may be configured and attached to non-ferrous base 229 or support plates 230 as necesssary or desirable using conventional fasteners 231, provided that the stator magnets 200, 202 retain their predetermined spaced relationship. As noted before, highly permeable magnetic material may be used to assist in shaping the magnetic field.

The rotor 232 is mounted on a shaft 234 that is coincident with the longitudinal axis 204 of the stator. The shaft is suitably journaled for rotation in bearings 236 mounted in the support plates 230 or the like. The rotor may be secured against rotational slippage with respect to the shaft by a key 238 or splines (not shown).

The rotor itself is cup-shaped, comprising a disk like magnet keeper 240 and an axially extending boss 242 at the periphery thereof. The disk is coaxial with and perpendicular to the shaft 234 and longitudinal axis 204. The rotor permanent magnets 244 are attached to the boss 242 at predetermined spaced intervals and are axially disposed for rotation at a fixed radius in the gap 220 between the opposing stator magnets 200, 202.

The rotor magnets 244 are curved, generally triangular prisms, as described earlier in connection with Figure 5. Each has a narrow circumferential end or tip 246 and wider circumferential end or base 248. The two curved faces define opposite polarity magnetic poles 250N, 250S that are in repulsion with respect to the stator magnet faces 206, 212. A curved central axis 252 bisects the curved rotor magnet faces and lies at a fixed radius $R_3$ from the transverse axis 204 at all angular positions. The fixed radius $R_3$ also defines the center of the gap 220. The tip 246 of the rotor magnet is oriented to enter the gap entrance section 222, followed by the base 248, as the rotor turns. As with the magnet keepers 226 for the stators, the rotor 232 is made of non-ferrous material and its configuration may be amended as necessary or desirable provided that the rotor magnets maintain their position and orientation within the gap 220. As noted in connection with Figs. 4 and 5, rectangular rotor magnets may be substituted for the illustrated triangular magnets.

The electronic control means 56, including the electromagnet 150, tachometer 160 and electrical circuit 162, are identical to that described earlier in connection with Figures 6, 7 and 8, except that the electromagnetic poles 152, 154 are disposed radially rather than axially. Accordingly, those components in Figures 12 and 13 are identified with the same numbers as the like components in Figures 6, 7 and 8.

Referring now to Figure 14, a sensor 300, which may be the equivalent of the electrical circuit 162 in Figs. 7 and 13, generates an output pulse on line 302 in response to the rotational speed and position of the shaft 82. The output pulse on line 302 is transmitted to a pulse shaper 304 to provide output pulses of uniform voltage and duration on line 306. Although the pulse shaper 304 is not essential to the circuit, it enhances the stability and uniformity of operation. An RPM display 308 may be connected to the pulse shaper 304 in a known manner, as by line 310, to provide a direct readout of the motor's rotational speed, if desired. The output of the pulse shaper is provided by line 306 to the electronic timing adjustment 312, which may delay in time the output of the pulse shaper 304. Such a delay may also be accomplished mechanically by altering the position of the sensor 300. The time adjusted signal output appears on lines 314, 316. The frequency RPM comparator compares the differences between the signal on line 320 from the clock reference 322 and the signal on line 314 from the electronic timing adjustment, and it produces a proportional output on line 324 that represents an error signal. The electromagnet controller 326 applies an electrical pulse of predetermined magnitude and time delay to the electromagnet 328 via line 330 in response to the input from the frequency RPM comparator 318 and electronic timing adjustment 312. By balancing the resistive, capacitive, and inductive values in the electromagnet controller circuit of Fig. 16, synchronous operation is possible. The electromagnet will first attract the rotor magnet as it approaches the center of the electromagnet air gap and then reverse the polarity of its magnetic field to repel the rotor magnet as it leaves the center of the electromagnet air gap.

The sensor 300 may be one of many types which provide an output signal, preferably digital, in response to the rotational speed of the rotor. It may detect rotor speed in any conventional manner, for instance, by the use of a magnetic sensor (Microswitch type 4AVIIA), an electromagnetic eddy current sensor (Microswitch type FYFA2N6—2), an optical infrared sensor, or a mechanical linkage sensor. For the present invention, six pulses are produced for each 360° rotation, i.e. one pulse for each rotor magnet.

The pulse shaper 304 provides an output pulse of uniform voltage and period, in response to an input pulse from the sensor 304, that meets predetermined threshold specifications for the electronic timing adjustment 312. The shape of the output pulse on line 306 is independent of the shape of the input pulse on line 302. An LM555 integrated circuit is suitable, and its design and use is well known.

The RPM display 308 may be any suitable or compatible frequency display. Examples include Heathkit model IM—2410 and ICM 7226 from Intersil coupled to an LED display.

The electronic timing adjustment 312 permits selective time-based variation of the application of electrical energy to the electromagnet 328. Referring to Fig. 15, the signal on line 306 from the pulse shaper 304 is multiplied, for example, twenty times by the frequency multiplier 332 and supplied to the decade counter 334 via line 336. The multiplier may be an SN7493 integrated circuit. The decade counter provides on line 338 twenty binary coded counts for each pulse from the pulse shaper 304. The binary coded decimal (BCD) to decimal decoder 340 converts the binary coded count to a pair of ten unit or decimal counts. The first decimal count governs the electromagnet for a first rotor and the second decimal count governs the electromagnet for a second rotor, the electromagnets being one half cycle or 180° out of phase as illustrated in the dual rotor motors of Figs. 7, 8, 12 and 13. Thus, one may delay energization of the electromagnets from zero to fifty percent by adjusting contact arm 346. The BCD to decimal decoder 340 may be an SN7442 integrated circuit. The output on line 342 is provided to a flip flop 348 which alternates the output of the electronic timing adjustment between the two electromagnet controllers via pulse shapers 350, 352. A suitable substitute for the SN7293 includes a phase locked loop integrated circuit, such as LM 565 CN, interrupted by a divide by twenty integrated circuit, such as SN 7490. Still another means of frequency multiplication is the use of a frequency to voltage convertor 9400 CJ, a times-twenty amplifier LM 324 and then another 9400 CJ used as a voltage to frequency convertor.

The output from the electronic timing adjustment 312 is compared to the output from a clock reference 322 by a frequency-RPM comparator 318, such as a differential amplifier LM 741. The inputs on lines 314 and 320 result in an output signal on line 324 that is proportional to the difference between the actual rotor speed and the desired rotor speed.

The output from the frequency-RPM comparator 318 is supplied to the electromagnet controller 326 via line 324, as is the output from the electronic timing adjustment 312. The controller applies energy to the electromagnet 328 and controls the effect of the electromagnetic field by varying the timing of the electrical energy applied to the electromagnet, with respect to the angular position of the rotor magnets, and by varying the amplitude of the electrical energy pulse that generates the electromagnet field.

Referring to Fig. 16, the input on line 324 is applied to amplifier 326, such as an LM 741. The output of the amplifier 326 is applied via line 327 to the base of transistor $TR_1$, which is in series with a DC supply 328 and an energy storage capacitor $C_2$. Together they comprise a voltage regulator. Any suitable voltage regulating circuit may be utilized. Discharge of capacitor $C_2$ is selectively blocked by silicon controlled rectifiers $SCR_1$ and $SCR_2$. $SCR_1$ is normally off or nonconductive permitting $C_2$ to charge. It switches to its conductive state in response to a signal from the turn-on circuit 330.

The signal from the electronic timing adjustment 312 is applied to a pulse generator 332 with a voltage controlled time delay through a variable resistor $R_8$. After a threshold voltage is reached across resistor $R_8$, which triggers the preselected time delay in the pulse generator 332, a pulse output is supplied on line 334, 336. Thus, the firing circuit has two sources on time delay—the manual biasing adjustment of resistor $R_8$ and the automatic instantaneous adjustment from frequency-RPM comparator 318. An LM 122 integrated circuit is a suitable pulse generator. The pulse output on line 334 is applied to the base of transistor $TR_2$, such as a 2N2222, causing it to conduct and supply a sufficient turn-on voltage to the gate of $SCR_1$, triggering it into the on or conducting state. Elements $C_3$, $C_4$, $R_6$, and $R_7$ bias transistor $TR_2$ or filter signals.

Charged capacitor $C_2$ discharges through $SCR_1$ and energizes the balanced resistive, capacitive, inductive circuit represented by the capacitor $C_1$ and the electromagnet 338 to create an electromagnetic field across the poles of the electromagnet, which are disposed on opposite sides of the rotor (see Figs. 7 and 13) and attract (or repel) a rotor magnet. After the electromagnetic field peaks, it collapses and charges capacitor $C_1$, connected across the terminals of the electromagnet, to reverse the electromagnetic field. This repels (or attracts) the rotor magnet in synchronization with its rotational movement to urge it into the gap between the stator magnets. The timing circuitry determines when the electromagnet is energized, which in turn determines whether the electromagnet will initially repel or attract the rotor permanent magnets.

$SCR_1$ is turned off or rendered non-conducting by the cut-off circuit 340. The delayed output from pulse generator 332 on line 336 sets or resets flip-flop 341, the output of which is passed through amplifier 342 to the cut-off circuit 340. A predetermined time constant is set by adjustment of variable resistor $R_1$ and capacitor $C_6$, each placed across a different emitter-base junction of the unijunction transistor $TR_3$ in conventional fashion. When the time constant has been reached the unijunction transistor $TR_3$ conducts to fire $SCR_2$, which grounds capacitor $C_5$, drives the voltage across $SCR_1$ to zero, and thereby causes it to turn off. Resistors $R_2$, $R_3$ and $R_4$ bias transistor $TR_3$.

A number of variations are possible in the design of a suitable electronic control circuit. Adjustment of the time constants for the pulse generator 332 and the cut-off circuit 340, and the balancing of the RCL circuit for the electromagnet 338 depend upon the desired operational characteristics of the magnetic motor. The electromagnet is U or C shaped, as desired. In addition, one may elect to use analog or digital circuitry, a combination of both, or a microprocessor as desired.

Fig. 17 illustrates an alternate embodiment of the electromagnet and electromagnet controller circuit. The electromagnet 350 is electrically connected to a direct current voltage source 352 through a normally open relay 354 which, when energized, closes switch 356. The relay is energized by an electrically isolated circuit comprising an electromagnetic coil 358, a direct current voltage source 360, and a sensor switch 362. The sensor switch may be cam operated and placed in a location similar to that illustrated for the electrical circuit 162 in Figs. 7 and 13. Resistor 364, capacitor 366, and diode 368 balance the operation of the electromagnet 350.

The operation of the permanent magnet motor is described with reference to Figures 8 and 13A, starting with a rotor magnet completely inserted into the gap entrance section 222 as shown in Figure 13A. The radial distance from the face of the rotor magnet to the face of the stator magnet is greater at the tip of the rotor magnet than at the tail of the rotor magnet. Since the repulsive forces generated by the opposing rotor-stator magnetic fields are generally inversely proportional to distance (Coulomb's Law), a net force is created urging the rotor magnet in the direction of its tip and the ever widening gap. Each rotor magnet in the gap contributes to the force urging rotation of the rotor, and the rotor magnets are propelled from the gap entrance section to the gap exit section.

As the rotor magnet leaves the gap exit section and continues towards the entrance section, it encounters the repulsion of the magnetic field of the entrance section. If the rotational force generated by the magnets disposed within the gap and the electromagnetic field of the electronic control means is sufficient to overcome the repulsive forces hindering the entrance of the rotor magnet into the gap, rotation will continue. If the rotational force generated by the magnets disposed within the gap and the electronic control means is not sufficient, the electromagnetic means may be utilized to create a magnetic field to urge the rotor magnet into the entrance section of the gap. In a timed rotational sequence as determined by the tachometer, the electrical circuit induces a magnetic field to attract a rotor magnet as it leaves the gap exit section. Preferably, the preceding rotor magnet will be substantially within the gap entrance section so that the retarding effect of the electromagnetic field upon it will be negligible. As the attracted rotor magnet nears the middle of the gap between the electromagnet poles, the attractive field collapses and is reversed to repel the rotor magnet, urging it into the gap entrance section. This timed field reversal thus has a pull-push effect to enhance rotation of the rotor.

In addition, the repulsive force of an entering rotor magnet may be counterbalanced by the forward thrust of an exiting rotor magnet, thus reducing the negative thrust experienced by the entering magnet. This improves output torque and smoothes variations in torque.

In a similar fashion the electromagnetic means may be utilized to retard rotation or slow the rotational speed by varying the electromagnetic field strength or by reversing the field polarities. The speed or energy output of the permanent magnet motor may also be controlled by changing the face to face distance between the stator magnets. The closer they are to the face of the rotor magnets, the greater the magnetic forces between them, and the greater the energy output. On the other hand, the motor may be stopped by separating the stator halves.

In the alternative, the motor could operate utilizing attraction forces by reversing the polarity of the rotor magnet and the polarity of the electromagnetic means. A further altenative is to use an independent energy source to turn the rotor and use the apparatus as a generator. Movement of a magnet between the poles of the electromagnet will induce an electrical current therein, and additional coils may be placed around the periphery of the stator by, for example, connecting the outer surfaces of the stator magnets 92N and 90S (Fig. 8) with permeable magnetic material surrounded by an electrical coil.

The motor of this invention is not limited by size or configuration except as stated. However, to assist other in practicing the invention, the following specifications are set forth, although they may be changed as necessary or desirable.

Thickness of stator magnets: 0.5 inches.
Thickness of rotor magnets:
    Disc rotor: 0.5 inches
    Cup-shaped rotor: 0.5 inches tapering to
               .06 inches.
Width of gap inlet section: 0.51 inches.
Width of gap outlet section: .70 inches.
Stator circumference: 18 inches.
Rate of change of gap per inch of circumference:
    .008 to .015 inches.
Number of rotor magnets: 6
Magnets: Rare earth cobalt

As with the alternate embodiments disclosed herein, it is apparent that this invention is capable of various modifications in the shapes of the stator and rotor, their orientation with respect to each other or a common axis, and the shapes and orientations of the stator and rotor magnets. It is also apparent that different designs of the basic motor unit may be combined on a common shaft or nested within one another. Further modifications may be made in the materials used, magnetic or otherwise, to enhance operation or reliability, or to reduce costs. For instance, one may improve efficiency by cooling the magnets. This increases the magnetic field by reducing thermal activity which otherwise degrades internal coherence. Such an improvement may result in sizeable increases in output because the forces generated are proportional to the square of the field strength. Accordingly, while the invention has been described with reference to specific configurations, it is to be understood that this disclosure is to be interpreted in its broadcast sense and encompass the use of equivalent apparatus and mechanisms.

## Claims

1. An electromagnetic rotary motor comprising:
a) stator means including stator magnet means (90, 92; 200, 202) having opposing pole faces (152, 154; 206, 212) defining a gap (102; 200) therebetween, said gap having an entrance section (208, 214), an exit section (210, 216) and a generally curved longitudinal path extending from the entrance section to the exit section about a transverse axis (63; 204) said opposing pole faces having a face-to-face distance which changes from the entrance section to the exit section so that the magnetic flux density changes in the gap (102; 200) as a function of arc degree position about the transverse axis;
b) a rotor (54; 232) mounted for rotation about an axis generally coincident with the transverse axis (63; 204), said rotor including a predetermined number of rotor magnets (116; 244) disposed radially outwardly from the transverse axis and substantially within the gap (102; 220), each pole of each rotor magnet being spaced from the stator pole face and aligned in a predetermined orientation with respect thereto, the magnetic field of each of the rotor magnets interacting with the magnetic field of the stator magnet means; and
c) electronic control means (56) for inducing an electromagnetic field from an external source of energy, said control means (56) being responsive to the relative rotational position of the rotor for successively interacting with the magnetic field of each of the rotor magnets to urge each of the rotor magnets towards the entrance section (208; 214) of the gap (102, 200), whereby the magnetic field of each rotor magnet interacts with the magnetic field of the stator means and the control means creating forces which urge the rotor magnets along the longitudinal path of the stator gap, causing the rotor to rotate about the transverse axis (63; 204).

2. A motor as claimed in claim 1, characterised in that the pole faces (152, 154) define a gap (102) therebetween with opposite polarity poles facing each other across the gap, one of the stator magnets (90, 92) being generally C-shaped defining a transverse axis (63) with one end axially displaced from the other end to form a segment of a helix, and the second of the stator magnets (90, 92) being an axisymmetrical mirror image of said first stator magnet so as together to define a gap (102) having an entrance section, and in that the rotor (54) is generally disc-shaped and includes a predetermined number of magnets (116) disposed radially outwardly from the transverse axis (63) in a predetermined spaced relationship and substantially within the gap (102).

3. A motor as claimed in claim 1, characterised in that the pole faces (206, 212) define a gap (220) therebetween with opposite polarity poles facing each other across the gap, each of the stator magnets (200, 202) being generally C-shaped defining a transverse axis (204) and having a gradually increasing radius to form a segment of a spiral, the range of radii of one stator magnet (202) being less than the range of radii of the other stator magnet (200), said stator magnets being coaxial and generally coplanar, and in that the rotor (232) is cup-shaped and includes a predetermined number of magnets (244) disposed radially outwardly from the transverse axis (204) in a predetermined spaced relationship and substantially within the gap (220).

4. A motor as claimed in claim 1, 2 or 3, characterised in that the face-to-face distance between the stator pole faces (152, 154; 206, 212) increases from the entrance section (208, 214) to the exit section (210, 216).

5. A motor as claimed in claim 1, 2 or 3, characterised in that the face-to-face distance between the stator pole faces (152, 154; 206, 212) decreases from the entrance section (208, 214) to the exit section (210, 216).

6. A motor as claimed in any one of the preceding claims, characterised in that the stator means (52) includes at least one pair of permanent magnets (90, 92; 200, 202).

7. A motor as claimed in claim 1, 2, 3 or 4, characterised in that each of the rotor magnets (116, 244) is in repulsion with respect to the faces of the stator magnet means (90, 92; 200, 202).

8. A motor as claimed in claim 1, 2, 3 or 5, characterised in that each of the rotor magnets (116, 244) is in attraction with respect to the faces of the stator magnet means (90, 92; 200, 202).

9. A motor as claimed in any one of the preceding claims, characterised in that the stator magnet means (90, 92; 200, 202) includes a backing plate of permeable magnetic material substantial coextensive with the stator permanent magnet means (90, 92; 200, 202).

10. A motor as claimed in claim 2 or 3, characterised in that the ends of each of the stator permanent magnets (90, 92; 200, 202) define an arc of approximately the same number of degrees measured in the direction of rotation as the number of degrees of arc between the centers of adjacent rotor magnets (116; 244).

11. A motor as claimed in claim 2, 3 or 10, characterised in that the field of the electronic control means (56) for inducing the electromagnetic field is primarily located between the ends of the C-shaped stator magnets (90, 92p 200, 202).

12. A motor as claimed in any one of the preceding claims, characterised in that the electronic control means (56) is arranged to induce, in a sequential timed relationship dependent upon rotor rotational position, an electromagnetic field to attract each of the rotor magnets (116; 224) as it exits the stator gap (102; 220) and subsequently to induce an electromagnetic field to repulse each of the rotor magnets (116; 244) as it enters the stator gap, thereby enhancing rotation.

13. A motor as claimed in any one of the preceding claims, characterised in that the electromagnetic control means (56) is arranged to induce, in a sequential timed relationship dependent upon rotor rotational position, and electromagnetic field to repulse each of the rotor magnets (116; 244) as it exits the stator gap (102; 220) and subsequently to induce an electromagnetic field to attract each of the rotor magnets (116; 244) as it enters the stator gap, thereby retarding rotation.

14. A motor as claimed in any one of the preceding claims, characterised in that the electronic control means (56) includes electromagnetic field means for selectively inducing predetermined magnetic field proximate the stator gap (102; 220) and signal means responsive to the relative rotational position of the rotor shaft to energize the electromagnetic field means.

15. A motor as claimed in claim 14, characterised in that the electronic control means (56) includes sensor means (300) for monitoring the actual rotational position of the rotor (54; 232) and generating a signal representative thereto, reference means (322) for generating a signal representing a desired rotor rotational position, comparator means (318) responsive to the sensor means signal (314) and the reference means signal (320) for generating an error signal (324), and means for generating an electromagnetic field (326, 328) in response to said error signal (324) selectively to enhance or retard rotation of the rotor to minimize the difference between the rotor actual rotational position and the rotor desired rotational position.

**Patentansprüche**

1. Elektromagnetischer Umlaufmotor, bestehend aus:

a) Statormitteln mit Statormagnetmitteln (90, 92; 200, 202) mit gegenüberliegenden Polflächen (152, 154; 206, 212), die zwischen sich einen Spalt (102; 200) definieren, der einen Eintrittsabschnitt (208, 214), einen Ausgangsabschnitt (210, 216) und eine im allgemeinen bogenförmige längliche Bahn hat, die sich vom Eintrittsabschnitt zum Ausgangsabschnittum eine Querachse (63, 204) erstreckt, wobei die sich gegenüberliegenden Polflächen einen Abstand voneinander besitzen, der sich vom Eintrittsabschnitt zum Austrittsabschnitt so ändert, daß die Magnetflußdichte sich im Spalt (102; 200) als Funktion der Bogengradstellung un die Querachse ändert;

b) einen Rotor (54; 232), der verdrehbar auf einer Achse montiert ist, die im allgemeinen mit der Querachse (63; 204) zusammenfällt, wobei der Rotor eine vorbestimmte Anzahl Rotormagnete (116; 244) besitzt, die von der Querachse und im wesentlichen in dem Spalt (102; 220) radial nach außen Angeordnet sind, wobei jeder Pol jedes Rotormagneten von der Statorpolfläche einen Abstand besitzt und in einer vorbestimmten Orientierung hierzu ausgerichtet ist, so daß das Magnetfeld jedes Rotormagneten mit dem Magnetfeld der Statormagnetmittel zusammenwirkt; und

c) aus einer elektronischen Steuerung (56) zur Induzierung eines elektromagnetischen Feldes aus einer äußeren Energie quelle, wobei die Steuerung auf die relative Drehstellung des Rotors anspricht zur aufeinanderfolgenden Beeinflussung mit dem Magnetfeld jedes der Rotormagneten, um jeden der Rotormagnete gegen den Eintrittabschnitt (208; 214) des Spaltes (102; 200) zu treiben, wodurch das Magnetfeld jedes Rotormagneten das Magnetfeld des Stators beeinflußt, und die Steuerung Kräfte erzeugt, die die Rotormagnete auf der längsgerichteten Bahn des Statorspaltes drücken, wodurch der Stator zum Drehen um die Querachse (63; 204) veranlaßt wird.

2. Motor nach Anspruch 1, dadurch gekennzeichnet, daß die Polflachen (152, 154) einen Spalt (102) zwischen sich definieren mit entgegengesetzt polarisierten Polen, die einander über den Spalt zugekehrt sind, wobei einer der Statormagneten (90, 92) im allgemeinen C-förmig ist, wodurch eine Querachse (63) definiert ist, deren eines Ende gegenüber dem anderen Ende axial versetzt ist, um ein Segment einer Wendel zu bilden, und wobei der zweite der Statormagneten (90, 92) ein achssymmetrisches Spiegelbild des ersteren Statormagneten ist, um zusammen einen Spalt (102) zu definieren, der einen Eingangsabschnitt hat, und daß der Rotor (54) im allgemeinen scheibenförmig ist und eine vorbestimmte Anzahl Magnete (116) aufweist, die von der Querachse (63) in festgelegten Abständen und im wesentlichen in dem Spalt radial nach außen angeordnet sind.

3. Motor nach anspruch 1, dadurch gekennzeichnet, daß die Polflächen (206, 212) einen Spalt (220) zwischen sich definieren mit entgegengesetzt polarisierten Polen, die über den Spalt einander zugekehrt sind, wobei jeder der Statormagneten (200, 202) im allgemeinen C-förmig ist eine Querachse (204) definiert und einen graduell steigenden Radius hat, um ein Spiralsegment zu bilden, wobei der Bereich in der Radien des einen Statormagneten (202) kleiner ist als der Bereich der Radien des anderen Statormagneten (200), wobei diese Statormagneten koaxial und im allgemeinen koplanar sind, und daß der Rotor (232) tassenförmig ist und eine bestimmte Anzahl Magnete (244) aufweist, die von der Querachse (204) in vorbestimmten Abständen und im wesentlichen im Spalt angeordnet sind.

4. Motor nach Anspruch 1, 2 oder 3, dadurch gekennzeichnet, daß sich der Abstand zwischen den Statorpolflächen (152, 154; 206, 212) von Eintrittsabschnitt (208, 214) zum Ausgangsabschnitt vergrößert.

5. Motor nach Anspruch 1, 2 oder 3, dadurch gekennzeichnet, daß sich der Abstand zwischen den Statorpolflächen (152, 154; 206, 212) von Eintrittsabshnitt (208, 214) zum Ausgangsbschnitt (210, 216) verringert.

6. Motor nach einem der Ansprüche 1 bis 5, dadurch gekennzeichnet, daß der Stator (52) mindestens ein Paar Permanentmagnete (90, 92) aufweist.

7. Motor nach Anspruch 1, 2, 3 oder 4, dadurch gekennzeichnet, daß jeder Rotormagnet (116, 244) in bezug auf die Flächen der Statormagnete (90, 92; 200, 202) abstoßend angeordnet ist.

8. Motor nach Anspruch 1, 2, 3 oder 5, dadurch gekennzeichnet, daß jeder Rotormagnet (116, 244) in bezug auf die Flächen der Statormagnete (90, 92; 200, 202) anziehend angeordnet ist.

9. Motor nach einem der Ansprüche 1 bis 8, dadurch gekennzeichnet, daß die Statormagnete (90, 92; 200, 202) eine rückwärtige Platte (backingplate) aus permeablem magnetischem Material aufweisen, die sich in Verlängerung der Statorpermanentmagneten (90, 92; 200, 202) erstrecken.

10. Motor nach Anspruch 2 oder 3, dadurch gekennzeichnet, daß die Enden jedes der Statorpermanentmagnete (90, 92) einen Bogen von etwa der gleichen Gradzahl, gemessen in eindrehrichtung, wie die Gradzahl des Bogens zwischen den Mitten benachbarter Rotormagnete (116; 244) definieren.

11. Motor nach Anspruch 2, 3 oder 10, dadurch gekennzeichnet, daß das Feld der eletronischen Steuerung (56) zum Induzieren des elektromagnetischen Feldes hauptsächlich zwischen den Enden der C-förmig profilierten Statormagnete (90, 91; 200, 202) angeordnet sind.

12. Motor nach einem der Ansprüche 1 bis 11, dadurch gekennzeichnet, daß die elektronische Steuerung (56) ausgebildet ist, um in einem aufeinanderfolgenden zeitlichen Verhältnis, abhängig von der Rotordrehstellung, ein elektromagnetisches Feld zu induzieren, um jeden Rotormagneten (116; 244) anzuziehen, sobald er aus dem Motorspalt (102; 220) austritt, und um anschließend ein elektromagnetisches Feld zu induzieren, um jeden Rotormagneten (116, 244) abzustoßen, sobald er in den Statorspalt gelangt, wodurch die Rotation verstärkt wird.

13. Motor nach einem der Ansprüche 1 bis 12, dadurch gekennzeichnet, daß die elektromagnetische Steuerung (56) ausgebildet ist, um im aufeinanderfolgenden zeitlichen Verhältnis, abhängig vo der Rotordrehstellung, ein elektromagnetisches Feld zu induzieren, um jeden Rotomagneten (116; 244) abzustoßen, sobald er den Statorspalt (102; 220) verläßt, und um anschließend ein elektromagnetisches Feld zum Anziehen jedes Rotormagneten zu induzieren, sobald er in den Motorspalt gelangt, wodurch die Rotation verzögert wird.

14. Motor nach einem der Ansprüche 1 bis 13, dadurch gekennzeichnet, daß die elektronische Steuerung (56) elektromagnetische Feldmittel zur selektiven Induzierung eines vorbestimmten magnetischen Feldes in Nähe des Statorspaltes (102; 220) aufweist sowie Signalmittel, die auf die relative Drehstellung der Rotorwelle ansprechen, um das elektromagnetische Feld zu erregen.

15. Motor nach Anspruch 14, dadurch gekennzeichnet, daß die elektronische Steuerung (56) aufweist: Sensormittel (300) zur Ermittlung der tatsächlichen Drehstellung des Rotors (54; 232) und zur Erzeugung eine hierzu repräsentativen Signals, Referenzmittel (322) zur Erzeugung eine Signals, welches eine gewünschte Rotordrehstellung darstellt, komparatormittel (314), die auf das Sensormittelsignal (314) und das Referenzmittelsignal (320) zur Erzeugung eines Fehlersignals (324) ansprechen, sowie Mittel zur Erzeugung eines elektromagnetischen Feldes (326, 328) als Antwort auf das Fehersignal (324), um wahlweise die Rotordrehzahl zu erhöhen oder zu verringern, um die Differenze zwischen der tatsächliche Drehstellung des Rotors und der gewünschten Drehstellung des Rotors zu vermindern.

## Revendications

1. Un moteur rotatif électromagnétique comprenant;

a) un ensemble stator comprenant un ensemble aimants du stator (90, 92; 200, 202) possédant des faces polaires opposées (152, 154; 206, 212) délimitant un intervalle (102; 200) entre elles, ledit intervalle possédant une entrée (208, 214), une sortie (210, 216) et un chemin longitudinal généralement courbe allant de l'entrée à la sortie près d'un axe transversal (63; 204) les dites faces polaires possédant und distance de face-à-face variant à partir de l'entrée jusqu'à la sortie de façon à ce que la densité du flux magnétique se modifie dans l'intervalle (102; 200) en fonction de la position des degrés arc prés de l'axe transversal.

b) un rotor (54; 232) monté pour la rotation près d'un axe coïncidant généralement avec l'axe transversal (63; 204), le dit rotor comprenant un nombre prédéterminé d'aimants du rotor (116; 244) disposés sur toute la circonférence à l'extérieur à partir de l'axe transversal et principalement dans l'intervalle (102; 220), le pôle de chaque aimant du rotor étant espacé de la face polaire du stator et aligné suivant une orientation prédéterminée par rapport à elle, le champ magnétique de tous les aimants du rotor agissant sur le champ magnétique de l'ensemble aimants du stator et réciproquement; et

c) un ensemble de commande électronique (56) pour créer un champ électromagnétique à partir d'une source externe d'énergie, ledit ensemble de commande (56) étant sensible à la position de rotation relative du rotor lors d'intéractions successives avec le champ magnétique de chaque aimant du rotor pour pousser chaque aimant du rotor vers l'entrée (208; 214) de l'intervalle (102; 200), par lequel le champ magnétique de chaque aimant du rotor agit sur le champ magnétique de l'ensemble stator et réciproquement et l'ensemble de commande créant des forces qui poussent les aimants du rotor le long du chemin longitudinal de l'intervalle du stator, faisant tourner le rotor près de l'axe transversal (63; 204).

2. Un moteur comme indiqué dans la revendication 1, caractérisé par le fait que les faces polaires (152, 154) délimitent un intervalle (102) entre les deux avec des pôles de polarité opposés se faisant face l'un à l'autre de chaque côte de l'intervalle, l'un des aimants du stator (90, 92) ayant généralement une forme en C définissant un axe transversal (63) avec une extrémité déplacée par rapport à l'axe à partir de l'autre extrémité pour former le segment d'une hélice, et le second des aimants du stator (90, 92) étant une image réfléchie symétrique par rapport à l'axe dudit premier aimant du stator pour délimiter un intervalle (102) possédant une entrée, le rotor (54) ayant généralement la forme d'un disque et comprenant un nombre prédéterminé d'aimants (116) disposés sur toute la circonférence à l'extérieur à partir de l'axe transversal (63) à une distance prédéterminée et principalement dans l'intervalle (102).

3. Un moteur comme indiqué dans la revendication 1, caractérisé par le fait que les faces polaires (206, 212) délimitent un intervalle (220) entre elles avec des pôles opposés de polarité se faisant face de chaque côté de l'intervalle, chaque aimant du stator (200, 202) ayant généralement une forme en C définissant un axe transversal (204) et possédant un rayon dont la valeur augmente peu à peu pour former le segment d'une spirale, la plage des rayons d'un aimant du stator (202) étant plus petite que la plage des rayons de l'autre aimant du stator (200), lesdits aimants du stator étant coaxiaux et généralement coplanaires, le rotor (232) comprend des cavités dans lesquelles vient se loger un nombre prédéterminé d'aimants (244) disposés sur toute la circonférence à l'extérieur à partir de l'axe transversal (204) à une distance prédéterminée et principalement dans l'intervalle (220).

4. Un moteur comme indiqué dans la revendication 1, 2 ou 3, caractérisé par le fait que la distance de face-à-face entre les faces polaires du stator (152, 154; 206, 212) augmente à partir de l'entrée (208, 214) jusqu'à la sortie (210, 216).

5. Un moteur comme indiqué dans la revendication 1, 2 ou 3, caractérisé par le fait que la distance de face-à-face entre les faces polaires du stator (152, 154; 206, 212) diminue à partir de l'entrée (208, 214) jusqu'à la sortie (210, 216).

6. Un moteur comme indiqué dans n'importe laquelle des revendications précédentes, caractérisé par le fait que l'ensemble stator (52) comprend au moins une paire d'aimants permanents (90, 92, 200, 202).

7. Un moteur comme indique dans la revendications 1, 2, 3 ou 4, caractérisé par le fait que chaque aimant du rotor (116, 244) est repoussé par rapport aux faces de l'ensemble aimants du stator (90, 92; 200, 202).

8. Un moteur comme indiqué dans la revendication 1, 2, 3 ou 5, caractérisé par le fait que chaque aimant du rotor (116, 244) est attiré par les faces de l'ensemble aimants du stator (90, 92; 200, 202)

9. Un moteur comme indiqué dans n'importe laquelle des revendications précédentes, caractérisée par le fait que l'ensemble aimants du stator (90, 92; 200, 202) comprent une plaque de support en matériau magnétique perméable ayant en grande partie la même dimension que l'ensemble aimants permanents du stator (90, 92; 200, 202).

10. Un moteur comme indiqué dans la revendication 2 ou 3, caractérisé par le fait que les extrémités de chacun des aimants permanents (90, 92; 200, 202) définissent un arc ayant environ le même nombre de degrés mesures dans la direction de rotation que le nombre de degrés de l'arc entre les centres des aimants du rotor adjacents (116; 244).

11. Un moteur comme indiqué dans la revendications 2, 3 ou 10, caractérisé par le fait que le champ de l'ensemble de commande électronique (56), pour créer le champ magnétique, est d'abord placé entre les extremités des aimants du stator en forme de C (90, 92; 200, 202).

12. Un moteur comme indiqué dans n'importe laquelle des revendications précédantes, caractérisé par le fait que l'ensemble de commande électronique (56) est disposé de facon à créer, dans un rapport séquentiel chronométré relatif à la position de rotation du rotor, un champ électromagnétique pour attirer tous les aimants du rotor (116; 244) lorsqu'ils sortent de l'intevalle du stator (102; 220) et pour créer par la suite un champ électromagnétique permettant de repousser tous les aimants du rotor (116; 244) lorsqu'ils rentrent dans l'intervalle du stator, augmentant ainsi la rotation.

13. Un moteur comme indiqué dans n'importe laquelle des revendications précédantes, caractérisé par le fait que l'ensemble de commande électronique (56) est disposé de façon à créer, dans un rapport séquentiel chronométré dépendant de la position de rotation de rotor, un champ électromagnétique pour repousser tous les aimants du rotor (116; 244) lorsqu'ils sortent de l'intervalle du stator (102; 220) et pour créer par la suite un champ électromagnétique pour attirer tous les aimants du rotor (116, 244) lorsqu'ils entrent dans l'intervalle du stator, retardant ainsi la rotation.

14. Un moteur comme indiqué dans n'importe laquelle des revendications précédantes, caractérisé par le fait que l'ensemble de commande électronique (56) comprend un ensemble champ électromagnétique pour créer de façon sélective un champ magnétique prédéterminé proche de l'intervalle du stator (102; 220) et un dispositif de signalisation sensible à la position de rotation relative de l'arbre du rotor pour exciter l'ensemble champ électromagnétique.

15. Un moteur comme indiqué dans la revendication 14, caractérisé par le fait que l'ensemble de commande électronique (56) comprend un ensemble détecteur (300) pour surveiller la position de rotation exacte du rotor (54; 232) et pour produire un signal représentatif de dette position, un dispositif de référence (322) pour produire un signal représentant la position de rotation souhaitée su rotor, un dispositif comparateur (318) sensible au signal de l'ensemble sensor (314) et le signal du dispositif de référence (320) pour produire un signal d'erreur (324), et un dispositif pour créer un champ électromagnétique (326, 328) en réponse audit signal d'erreur (324) pour accroître ou retarder de façon sélective la rotation du rotor afin de réduire la différence entre la position de rotation réelle du rotor et la position de rotation désirée du rotor.

_Fig-1_

_Fig-2_

_Fig-3_

**Fig-4**

**Fig-5**

**Fig-6**

EP 0 130 048 B1

Fig-7

Fig-8

3

FIG-9

FIG-11

FIG-10

FIG-12

FIG-13

FIG-13A

FIG-13B

Fig-14

Fig-15

FIG-16

FIG-17